Europäisches Patentamt

European Patent Office

Office européen des brevets

(11) Veröffentlichungsnummer: **0 163 929**
**A2**

## (12) EUROPÄISCHE PATENTANMELDUNG

(21) Anmeldenummer: 85105219.1

(22) Anmeldetag: 29.04.85

(51) Int. Cl.⁴: **A 01 B 1/06**

(30) Priorität: 04.06.84 DE 8417015 U

(43) Veröffentlichungstag der Anmeldung: 11.12.85
Patentblatt 85/50

(84) Benannte Vertragsstaaten: **AT BE CH FR IT LI NL SE**

(71) Anmelder: **Wolf-Geräte GmbH, Gregor-Wolf-Strasse Postfach 860 und 880, D-5240 Betzdorf/Sieg (DE)**

(72) Erfinder: **Eichhorn, Hermann, Am Alexander 4, D-5242 Kirchen (DE)**

(74) Vertreter: **Koch, Günther, Dipl.-Ing. et al, Kaufingerstrasse 8, D-8000 München 2 (DE)**

(54) **Bodenbearbeitungs-Handgerät.**

㉗ Ein Haltebügel 10 lagert mit den freien Enden seiner Schenkel eine Krümelwalze 20 und trägt eine Stielbefestigungsvorrichtung 24. Am Haltebügel 10 ist ferner ein Kultivator 26, bestehend aus einer oder mehreren nebeneinander angeordneten Scharen 28 angeordnet.

0163929

- 1 -

Bodenbearbeitungs-Handgerät

Die Erfindung bezieht sich auf ein Bodenbearbeitungs-Handgerät mit einem U-förmigen Haltebügel, dessen freie Schenkelenden eine aus benachbarten Sternfräserädern bestehende Krümelwalze lagert, und an dem eine Stielbefestigungsvorrichtung angeordnet ist, wobei der Haltebügel in Zugrichtung vor der Krümelwalze ein weiteres Werkzeug trägt.

Bei einem bekannten Handgerät dieser Gattung ist das weitere Werkzeug als Pendeljäter ausgebildet, der aus einem U-förmigen Bügel mit schneidmesserartigen Kanten besteht, der mit seinen freien Schenkelenden begrenzt pendelnd am Haltebügel gelagert ist. Hierdurch wird über einem festen Untergrund eine Oberflächenschicht mit feiner Krümelung geschaffen, wodurch in Saat- und Pflanzenbeeten bessere Anwachsbedingungen erlangt werden.

Der Erfindung liegt die Aufgabe zugrunde, ein einem ähnlichen Zweck dienendes Handgerät zu schaffen, welches die Oberflächenschichtbearbeitung erleichtert.

Gelöst wird die gestellte Aufgabe durch die im Kennzeichnungsteil des Anspruchs 1 angegebenen Merkmale.

Kultivatoren mit im allgemeinen drei Scharen sind an sich bekannt. Sie dienen zum Aufreißen des Bodens, damit dieser nicht durch Sonne und Wind ausgetrocknet wird, wenn grobe Schollen unbearbeitet liegen bleiben. In Verbindung mit der Krümelwalze schafft der Kultivator

0163929

- 2 -

die Möglichkeit, in einem Arbeitsgang die Schollen aufzubrechen und zu krümeln.

Der Einsatzbereich des erfindungsgemäßen Gerätes erstreckt sich demgemäß auf das Aufreißen und anschließende Krümeln der rauhen Bodenoberfläche, die dadurch saatfertig gemacht wird. Es können hiermit Gemüsekulturen im Jugendstadium gehackt werden, und es kann kleinkörniges Saatgut bei Breitsaat eingeigelt werden.

Durch Zug- und Druckbewegungen auf den Stiel ergibt sich ein pendelnder hin- und hergehender Arbeitsablauf. Je nach der Winkelanstellung des Bedienungsstieles kann die Eindringtiefe der Scharen geändert werden.

Die für die verschiedenen Arbeiten erforderlichen Werkzeuge sind erfindungsgemäß in einem Gerät integriert. Die Kraft wird von der Bedienungsperson über den Stiel und die Stielbefestigungsvorrichtung in das Arbeitswerkzeug eingeleitet.

Beim Arbeiten dringen die Zinken der Scharen durch die gewählte Arbeitsstellung des Gerätes beim Ziehen in den rauhen Boden ein, und während dieser Ziehbewegung wird der Boden in seiner Oberflächenschicht von den Scharen horizontal geschnitten und vom Zinkenschaft geteilt. Die nachfolgende Krümelwalze zerkleinert den Boden und macht ihn saatfein, wobei die Kapillarität wirksam unterbrochen und damit die

0163929

- 3 -

Verdunstung gemindert wird.

Weitere zweckmäßige Ausgestaltungen der Erfindung
ergeben sich aus den Unteransprüchen.

Nachstehend wird ein Ausführungsbeispiel der
Erfindung anhand der Zeichnung beschrieben. In
der Zeichnung zeigen:

Fig. 1    eine Seitenansicht des Bodenbearbeitungs-
Handgerätes nach der Erfindung;

Fig. 2    eine Draufsicht auf das Handgerät gemäß
Fig. 1;

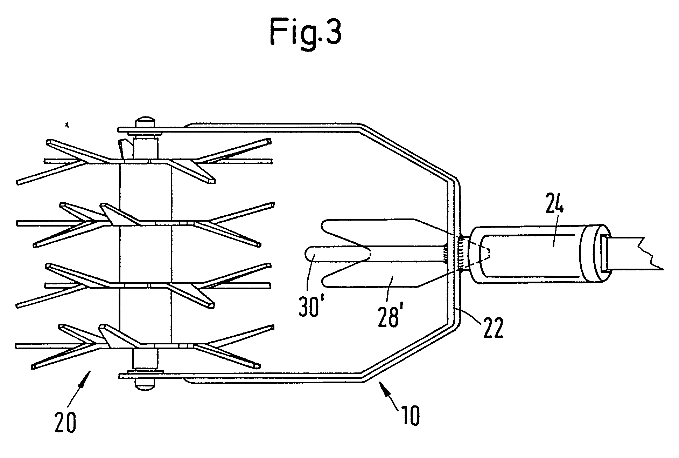

Fig. 3    eine Draufsicht eines abgewandelten Ausführungsbeispiels.

Das Bodenbearbeitungs-Handgerät weist einen U-förmigen Haltebügel 10 auf, der mit den freien Enden
seiner Seitenschenkel 12 eine Achse 14 lagert, auf
der durch Distanzbuchsen 16 in vorbestimmtem Abstand
gehaltene Sternfräserräder 18 drehbar sind, die zusammen eine Krümelwalze 20 bilden, die den Boden
zerkleinert und saatfein macht. An dem querverlaufenden Teil 22 des Haltebügels 10 setzt eine
Stielbefestigungsvorrichtung 24 an, die vorzugsweise als Teil einer Stielbefestigungskupplung ausgebildet ist, wie diese in der DE-PS 31 30 703 beschrieben ist.

In dem zwischen der Stielbefestigungsvorrichtung
24 und der Krümelwalze 20 befindlichen Teil trägt
der Haltebügel 10 einen Kultivator 26 in Form zweier
Scharen 28, die über Tragstäbe 30 am Haltebügel 10

- 4 -

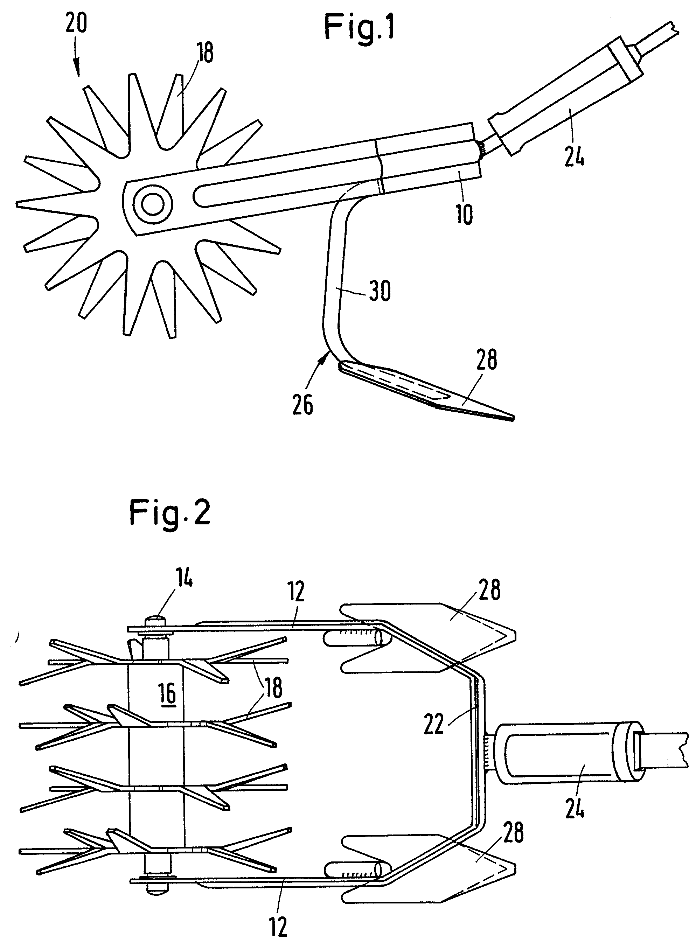

derart angeschweißt sind, daß sie im hinteren Abschnitt unter den Seitenschenkeln 12 zu liegen kommen. Die zinkenartigen Scharen sind in der aus Figur 1 ersichtlichen Weise gegenüber dem Umfangskreis der Sternräder 18 angestellt. Je nach Winkelstellung des Stieles können sie beim Ziehen am Stiel mehr oder weniger tief in die Erde eindringen. Dadurch wird der Boden während der Ziehbewegung horizontal geschnitten und vom Zinkenschaft (Tragstab 30) geteilt.

Bei dem Ausführungsbeispiel nach Fig. 3 ist nur eine einzige Schar 28' vorgesehen, die mit ihrem Schaft 30' am Quersteg 22 des Haltebügels 10 festgelegt ist.

- 5 -

Patentansprüche:

1. Bodenbearbeitungs-Handgerät mit einem U-förmigen Haltebügel, dessen freie Schenkelenden eine aus benachbarten Sternfräserädern bestehende Krümelwalze lagert, und an dem eine Stielbefestigungsvorrichtung angeordnet ist, wobei der Haltebügel in Zugrichtung vor der Krümelwalze ein weiteres Werkzeug trägt, dadurch gekennzeichnet, daß das weitere Werkzeug als Kultivator (26) ausgebildet ist.

2. Handgerät nach Anspruch 1, dadurch gekennzeichnet, daß der Kultivator (26) eine Schar (28') oder mehrere, parallel zueinander angeordnete Scharen (28) aufweist, die über am hinteren Ende der Scharen ansetzende Schäfte (30) mit dem Haltebügel (10) verbunden sind.

3. Handgerät nach den Ansprüchen 1 und 2, dadurch gekennzeichnet, daß je eine Schar (28) unter den Seitenschenkeln (12) des Haltebügels (10) angeordnet sind.

4. Handgerät nach einem der Ansprüche 1 bis 3, dadurch gekennzeichnet, daß die Stielbefestigungsvorrichtung (24) gegenüber der Ebene des Haltebügels nach oben abgewinkelt ist.

5. Handgerät nach einem der Ansprüche 1 bis 4, dadurch gekennzeichnet, daß die Schneidebene der zinkenartigen Scharen (28) gegenüber der Bügelebene nach unten und hinten geneigt ist.

6. Handgerät nach den Ansprüchen 1 und 2, dadurch gekennzeichnet, daß eine Schar (28') in der Mitte des Bügels (10) an seinem Mittelsteg angeordnet ist.

Fig.1

Fig.2

Fig.3

20    30'    28'    22    10    24